# EUROPEAN PATENT SPECIFICATION

(11) **EP 2 083 961 B1**
(45) Date of publication and mention of the grant of the patent: **12.01.2011**
(21) Application number: 06809239.4
(22) Date of filing: 13.11.2006
(51) Int. Cl.: B23D 53/02, B23D 55/08, B28D 1/08, B23D 53/04

(54) **SAWING MACHINE, LIKE BAND SAW OR THE LIKE, FOR STONES, MARBLES, WOOD OR MATERIALS OF OTHER KIND WITH CUTTING PLANE ADJUSTABLE ON DIFFERENT POSITIONS THEREOF**
SÄGEMASCHINE, WIE BANDSÄGE ODER DERGLEICHEN, FÜR STEINE, MARMOR, HOLZ ODER ANDERES MATERIAL MIT IN VERSCHIEDENEN POSITIONEN DAVON EINSTELLBARER SCHNITTEBENE
MACHINE À SCIER, DE TYPE SCIE À RUBAN OU SIMILAIRE, POUR PIERRE, MARBRE, BOIS OU AUTRES SORTES DE MATÉRIAUX, AVEC PLAN DE COUPE RÉGLABLE SUR DIFFÉRENTES POSITIONS

(43) Date of publication of application: 05.08.2009
(73) Proprietor: MD Modelleria Dario F.lli s.n.c., 31045 Motta di Livenza (TV) (IT); Marco, Dario, 31040 Chiarano (TV) (IT)
(72) Inventor: MARCO, Dario, 31040 Chiarano (TV) (IT)
(74) Representative: Dalla Rosa, Adriano
(86) International application number: PCT/IB2006/003283
(87) International publication number: WO 2008/059313

(56) References cited:
- EP-A1- 0 241 422
- WO-A-95/08413

## Description

The present invention refers to a sawing machine, such as a band saw or the like, for cutting stone, marble, wood, glass and other kinds of material, having its cutting plane adjustable into different positions thereof, adapted to cut such materials along rectilinear horizontal, vertical, inclined and variously contoured directions. A sawing machine according to the preamble of claim 1 is known from WO 95/08413.

Known in the art are sawing machines , such as band saws or the like, for cutting stone, marble, wood, glass and other kinds of material, which substantially comprise a metal frame in a roughly triangular shape, or - for the matter - even other shapes, in which there is mounted a running or sliding cutting blade formed of fragments or particles of diamond, capable of being rotatably driven in a vertical direction by at least a hydraulic motor of a traditional type, wherein the same frame is in turn supported on a horizontal resting table or surface secured by means of a vertical pin to the end portion of an articulated arm comprised of a forearm portion and a main arm portion joined with each other to form an articulated assembly by means of pins, wherein the free end of such articulated arm is hinged on to either a wall-mounting or post-mounting plate or an upright pillar secured to the ground, and with adjustment heights that may be fixed or variable depending on the size of the respective products to be processed and the kind of processing required, wherein said products are supported by appropriate stationary supports. In this manner, the band saw is capable of being displaced horizontally into different adjustment positions relative to each and any product to be processed, so as to shape the outline thereof with both horizontal and vertical rectilinear contours to the desired shape and size, by acting on the articulated arm so as to each time adjust the cutting blade into the respectively required working position.

It is the general object of the present invention to provide a sawing machine for processing materials of the above-noted kind, wherein the cutting plane is adjustable into various positions so as to be able to perform cuts not only according to horizontal and vertical rectilinear contours, but also according to differently inclined, as well as variously and variably conformed contours.

According to the present invention, these aims are reached in a sawing machine according to claim 1.

The invention will anyway be more readily understood from the description that is given below by way of non-limiting example with reference to the accompanying drawings, in which:
- Figure 1 is a side view of a sawing machine according to the present invention, as displaced into a first operating position thereof;
- Figure 2 is an enlarged side view of the lower portion of the machine shown in Figure 1, illustrating a particular construction detail of the same machine;
- Figure 3 is an enlarged side view of the upper portion of the machine shown in Figure 1, illustrating further particular construction details of the same machine;
- Figure 4 is an enlarged front view of a portion of the machine shown in Figure 1;
- Figure 5 is a front view of the machine shown in Figure 1;
- Figure 6 is a plan view of the inventive machine, illustrating further construction details thereof;
- Figure 7 is an enlarged front view of the machine shown in Figure 1, illustrating further construction details thereof;
- Figure 8 is a plan view of the construction details illustrated in Figure 7;
- Figure 9 is a plan view of the machine shown in Figure 1;
- Figure 10 is a side view of the machine shown in Figure 1, as displaced into a second operating position thereof;
- Figure 11 is an enlarged side view of the machine shown in Figure 10;
- Figure 12 is an enlarged side view of a further construction detail of the machine shown in Figure 10.

Illustrated schematically in the above-listed Figures is a sawing machine, such as a band saw 5 or the like, according to the present invention, for cutting stone, marble, wood, glass and other kinds of material with a cutting plane adjustable into different positions thereof, adapted to cut such materials along rectilinear horizontal, vertical, inclined and variously contoured directions.

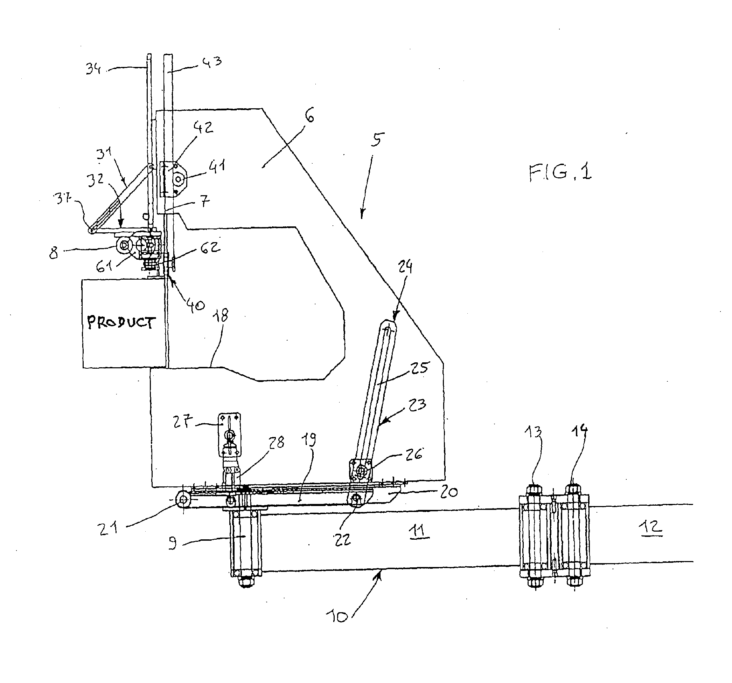

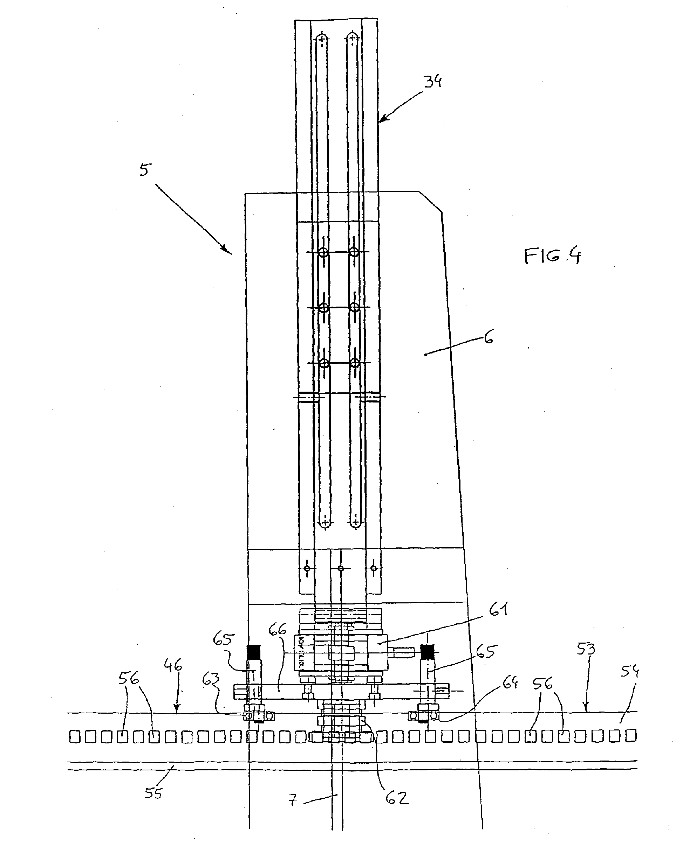

As can in particular be seen in Figures 1 to 5, sawing machine 5 is substantially comprised of a vertically extending metal frame 6 having a roughly triangular shape or - for the matter - any other appropriate shape, in the front portion of which there is mounted a running cutting blade 7 formed of diamond fragments and adapted to be rotatably driven in a vertical direction by at least a hydraulic motor 8 that is also appropriately supported in the front portion of the machine, wherein said frame is supported on a horizontal resting surface that is secured by means of a vertical pin 9 to an end of an elongated articulated arm 10, which is comprised of a forearm portion 11, in which there is secured the vertical pin 9, and a main arm portion 12 joined in an articulated manner with said forearm portion 11 by means of pins 13 and 14 at an end thereof and, at the opposite end thereof, with an upright pillar 16 by means of a pin 15, said pillar joining to a floor-mount enlarged bottom plate 17 for attachment to the ground.

The above-mentioned arm 12 can of course be also supported in a different manner, e.g. with the aid of a wall-mount plate or a plate for mounting on to a post or pillar, or the like, with adjustment heights that may be either fixed or variable depending to the size of the products to be processed and the kind of processing required, without this meaning any departure from the scope of the present invention.

Quite obviously, the sawing machine 5 may possibly be also sustained on the articulated arm 10 by means of articulated-joint mechanisms of a variety of different kinds, as these are widely known as such in the art (not shown), which allow for also a relative movement between the articulated arm and the sawing machine 5, thereby enhancing the ease of handling of the machine and facilitating the displacement thereof into its various operating positions, without this implying any departure from the scope of the present invention.

With this arrangement, the sawing machine 5 is capable of being rotated into various adjustment positions in a horizontal plane, about the vertical pin 9, so as to perform cuts in the products in different positions thereof along rectilinear, both horizontal and vertical directions. To this purpose, the products to be processed are placed to rest upon both a support system, which shall be described in greater detail further on, and a horizontal support table 18 provided in the sawing machine, or they can be alternatively placed to rest on specially provided moving supports (not shown) arranged on the front side of the machine in such position as to ensure that the cutting blade 7 is able to come into contact with the same products in the desired cutting positions. The inventive sawing machine 5 further includes an adjustment device to adjust the inclination thereof along a vertical plane, wherein said device is adapted to set within given limits the inclination of the machine in different positions, so as to determine variously inclined and contoured rectilinear cuts in the products being processed.

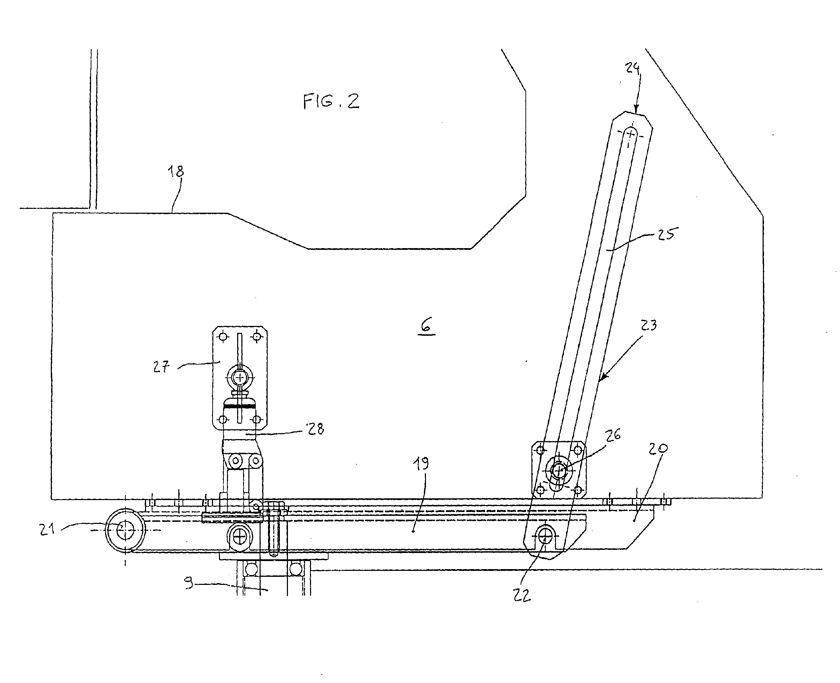

This adjustment device uses a pair of mutually cooperating bars that are applied in the lower portion of the frame 6 of the machine, as this can be seen in Figures 1 and 2, and include a horizontal stationary bar 19, which is secured to the vertical pin 9 of the articulated arm 10, and a moving bar 20 that is secured under the frame 6, wherein these bars are joined with each other in an articulated manner at an end thereof by means of a related pin 21, so that the moving bar 20 is capable of rotating upwards relative to the stationary bar 19, thereby displacing into various adjustment positions along with the frame 6, under resulting displacement of the sawing machine 5 and the cutting blade 7 into various inclined positions relative to the horizontal plane. Furthermore, at the other end thereof, the stationary bar 19 is linked by means of a corresponding pin 22 to a vertical elongated rod 23, which is provided with a free upper end 24 and an elongated slot 25, in which there is adapted to slide a protruding pin 26 secured to the lower portion of the frame 6 of the machine. Finally, the stationary bar 19 is also linked with the frame 6 via an actuator 27 of a kind that is generally known as such in the art, e.g. comprised of a manually operated hydraulic jack, whose body 28 is secured to the same stationary bar, and whose sliding stem 29 is secured with the free end thereof to a protruding pin 30 provided on the frame 6.

In the front portion of the sawing machine 5 according to the present invention there is provided a further system of adjustment rods of the machine, as formed of a pair of upper rods 31, which are arranged parallel to and spaced from each other, and a pair of lower rods 32, which are in turn arranged parallel to and spaced from each other, wherein the upper rods 31 are hinged with the upper ends 33 thereof on to a vertical elongated slide 34, which is adapted to slide vertically into various adjustment positions along appropriate runners (not shown) attached to the front portion of the frame 6 of the machine, and are provided with a respective free lower end 35 and elongated slot 36 in which there is adapted to slide at least a corresponding pin 37 secured to an end of the lower rod 32, whose other end 38 is hinged on to the elongated slide 34 in a position situated below the one of the upper rod 31.

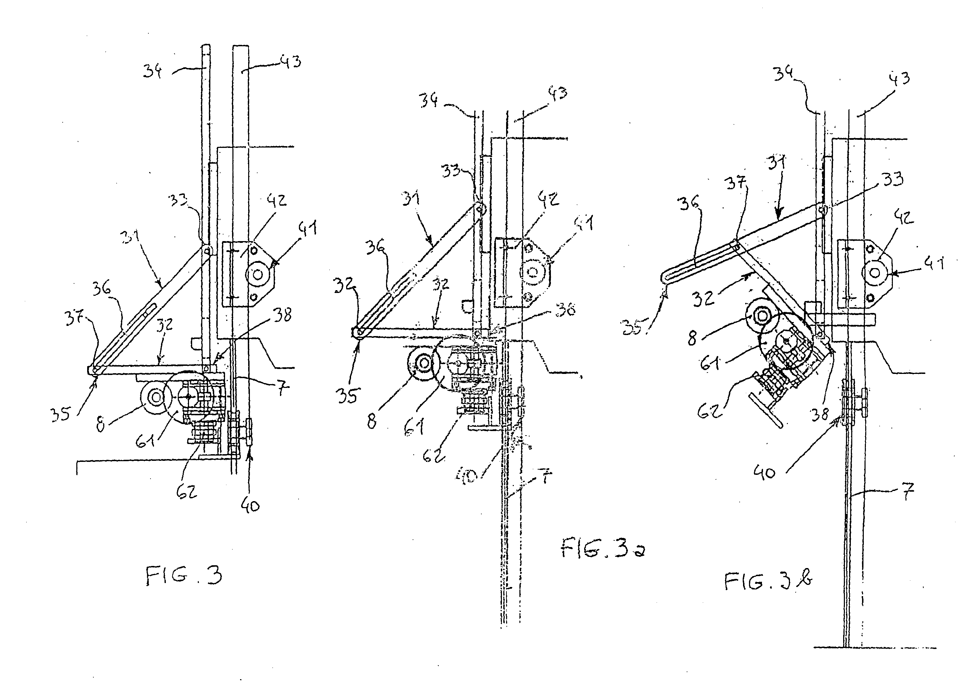

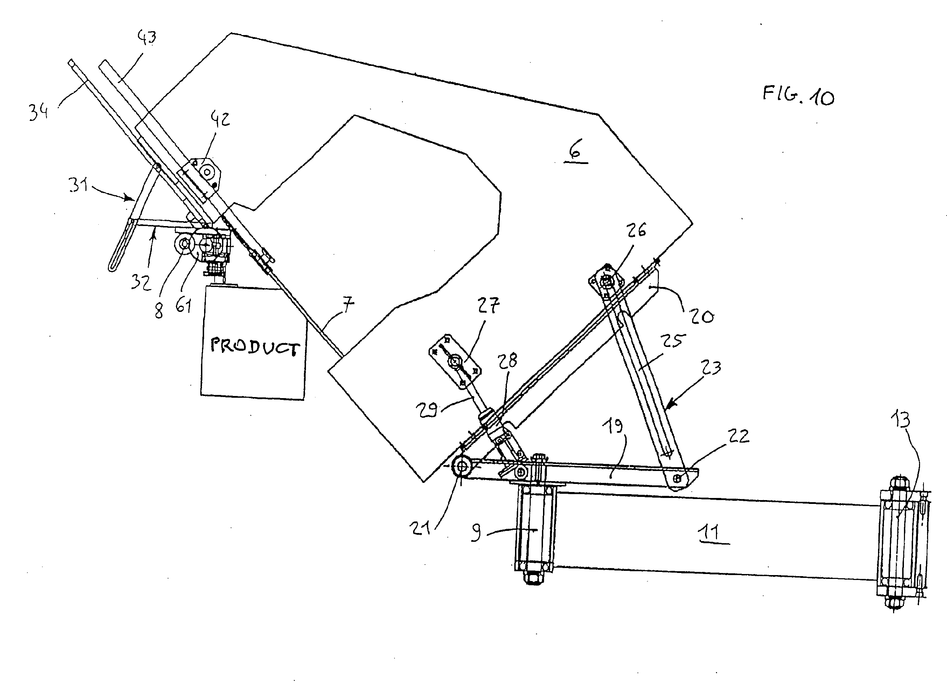

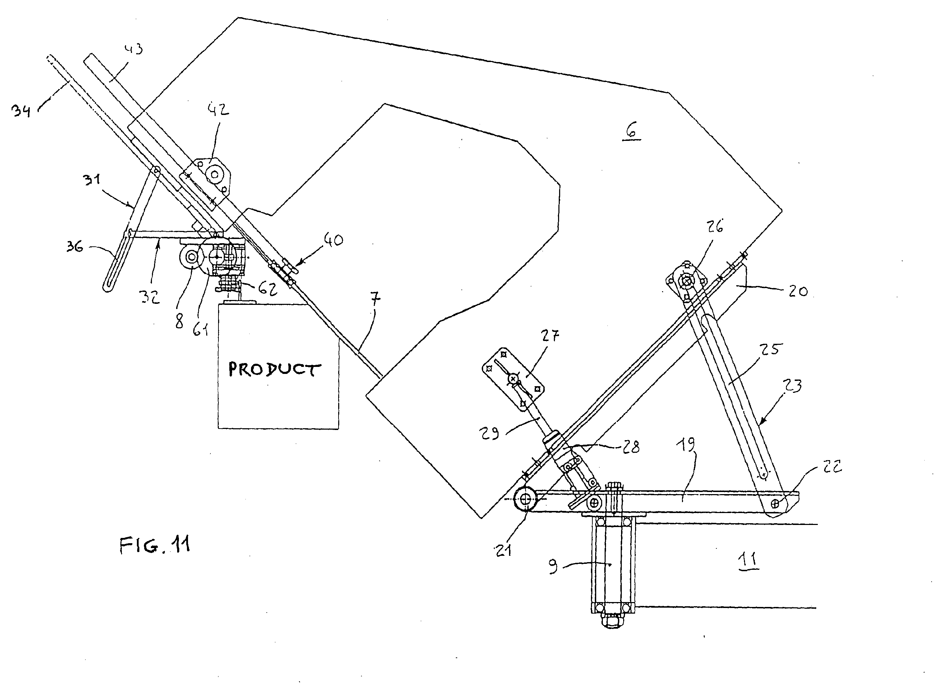

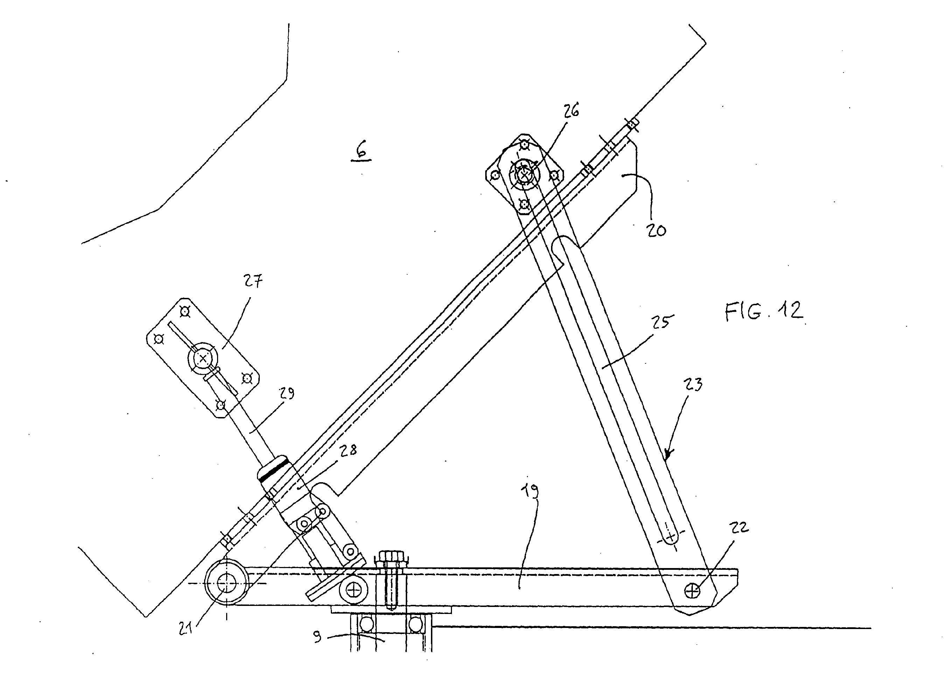

Thanks to the provision of the bars 19 and 20, the vertical elongated rod 23 and the above-mentioned system of adjustment rods, the sawing machine 5 is therefore able to be displaced along with the cutting blade 7 - by means of the hydraulic jack 27 - into various adjustment positions, from the horizontal position illustrated in Figures 1, 2 and 3 on to different forward inclined positions relative to said horizontal position, as illustrated in Figures 10, 11 and 12, in accordance with the inclination of the cuts to be performed on each product being processed, thereby enabling the products to be cut in horizontal and vertical rectilinear directions and with different and variable inclinations, through an upward stroke relative to the horizontal plane on the front side of the machine 5, as defined by the protruding pin 26 sliding in the elongated slot 25 and the pin 37 sliding in the elongated slot 36. In addition, as this can best be seen in Figure 3a, the adjustment rods can be displaced also heightwise to different adjustment positions along the elongated slide 34, with the machine itself oriented in the horizontal position, and - of course - they can also be displaced in the same manner while the machine is rotated in an inclined position (Figure 3b), in order to be able to adjust heightwise the arrangement of the component parts that shall be described below, according to the size of the products to be cut.

The sawing machine being discussed is furthermore arranged so as to guide the cutting blade 7 and keep it in the correct position regardless of the actual height, i.e. at any height whatsoever of the products to be processed. To this purpose, the machine is provided with wire-guide rollers or wheels (not indicated), between which the cutting blade is able to slide. These wheels are attached to a height-adjustable support assembly 40 (see Figures 1 and 3) that is operated vertically to move into various adjustment positions by means of an index crank in the form of a handwheel 41 sustained on a side plate 42 secured to the frame 6 and provided with a pinion gear (not shown) acting on a vertical rack 43, adapted to slide vertically along a runner (not indicated) provided through the plate 42, and whose lower end is attached to the support assembly 40.

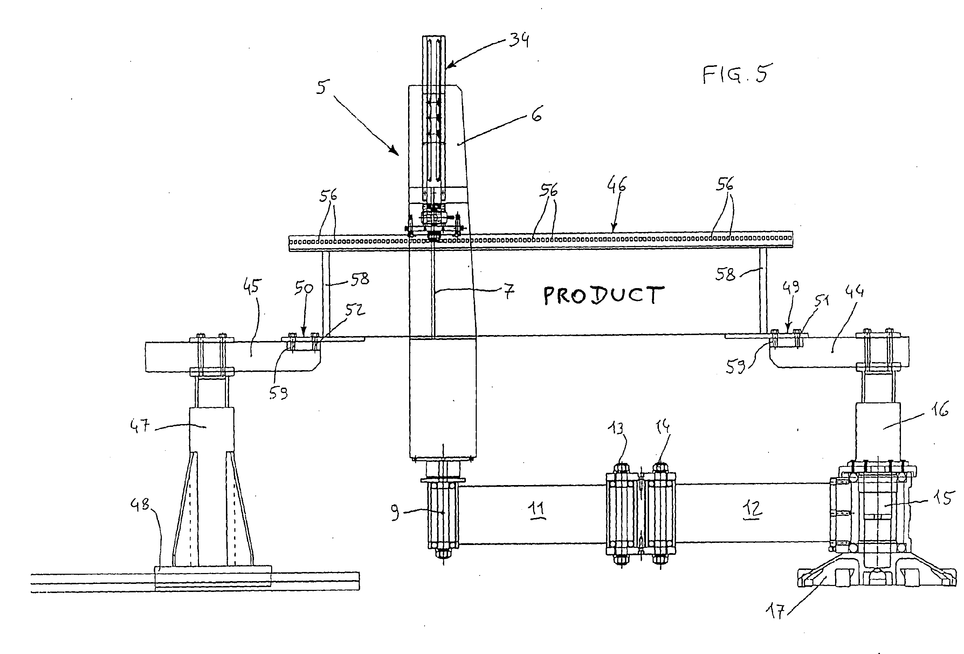

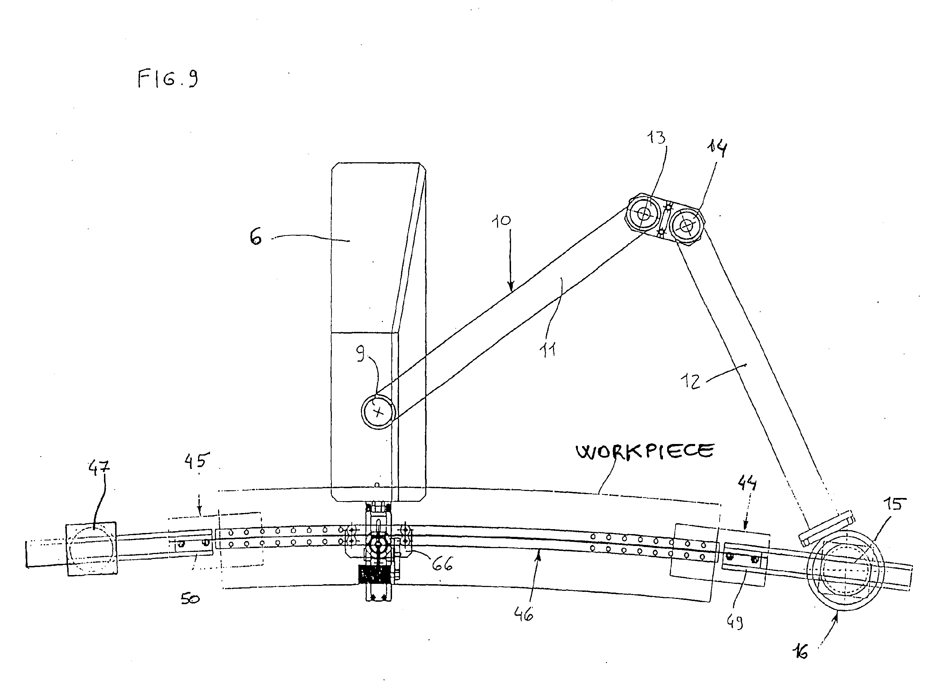

The sawing machine according to the present invention is also arranged so as to be able to cut the products in a vertical and inclined plane along variously contoured directions, to any kind of shape and outline whatsoever, e.g. curved, corrugated, wavy, semi-circular and similar outlines. To this purpose, the inventive machine is provided with a system for supporting and attaching templates that are shaped with the desired outline as required for the particular product to be processed. This system, which cooperates with the sawing machine in the manner that will be described below, is substantially comprised of two rectilinear, elongated rigid supports 44 and 45 having a large resting surface (see Figures 5 and 9) adapted to support any and each product to be processed, and a metal template 46 shaped to the same outline as the one of the product to be obtained, said template being in turn sustained by the supports 44 and 45 in the manner as this shall be described in greater detail further on, wherein the first one 44 of such supports is appropriately secured to the upper portion of the upright pillar 16 and the second one 45 of said supports is appropriately secured to the upper portion of a further upright pillar 47 joined to an enlarged bottom plate 48 secured to the ground at a given distance from the previously mentioned pillar, so as to enable both the product to be cut and the template 46 to be supported thereupon.

The elongated supports 44 and 45 are suitably shaped so as to be able to support a respective plate 49 and 50 adapted to slide along the related support into various adjustment positions and be locked from time to time in the respectively desired adjustment position by means of bolts or similar means 51 and 52. Each one of these plates 49 and 50 is adequately large so as to enable the product to be processed to rest thereupon and be supported along a peripheral border thereof, whereas the other peripheral border of the same product is placed and rests on the support plate 18 of the machine, wherein these plates are adapted to also support the end portions of the template 46 in the manner as will described in greater detail hereinbelow.

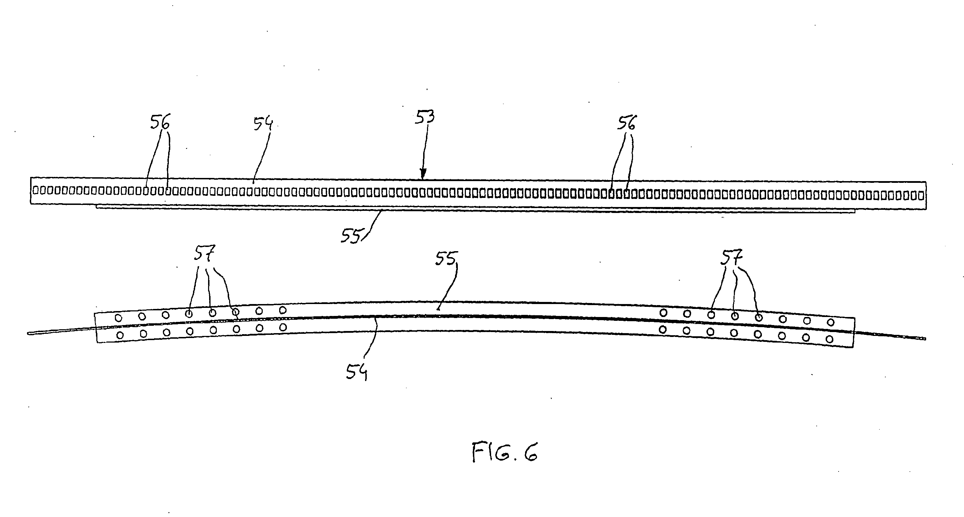

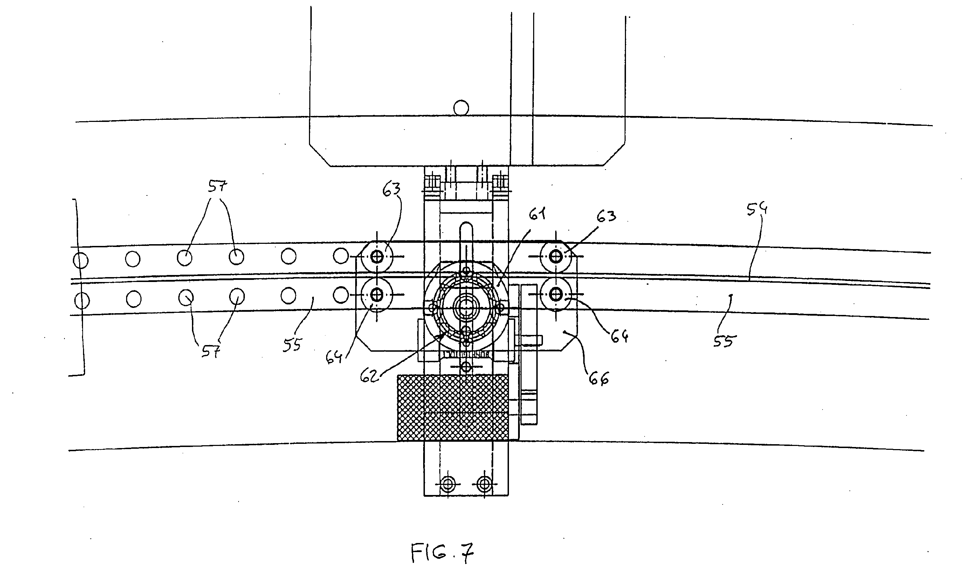

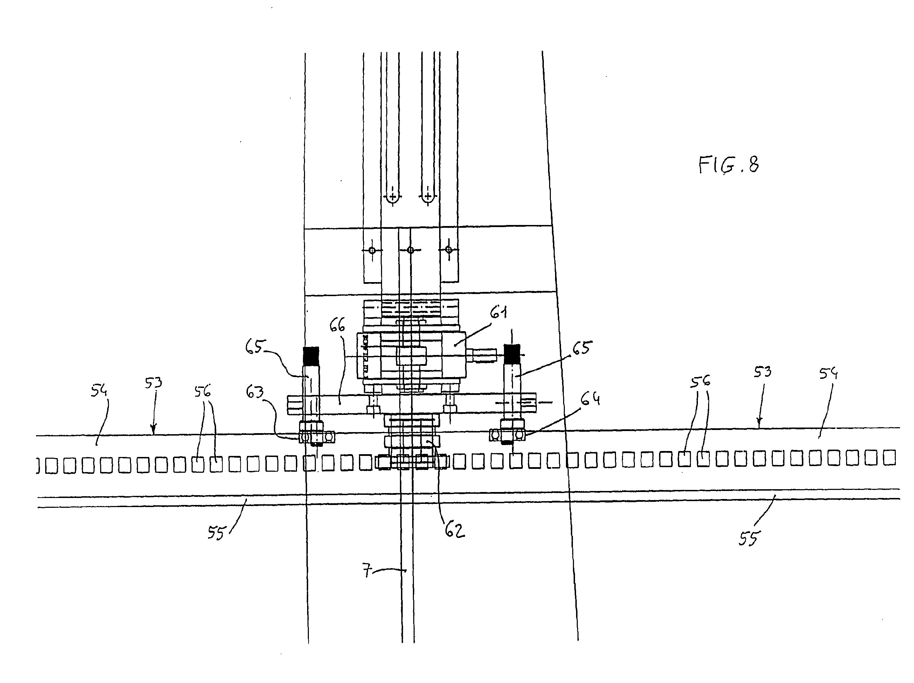

Each template 46 that is used on the machine is preferably comprised of a L-shaped metal part 53 (see Figures 5-9), which is provided with a thin and short upper vertical wing 54 orthogonally joined to a short lower horizontal wing 55, wherein the vertical wing 54 is conformed - over the entire longitudinal extension thereof - to the same outline of the product to be obtained after cutting, and is provided - again over the entire longitudinal extension thereof - with a plurality of identical through-apertures 56 forming the teeth of a rack adapted to bring about the forward shift of the cutting blade 7 - as this shall be described in greater detail further on - so as to cause the product to be cut to the same contour or outline as the template 46. The horizontal wing 55 is in turn perforated along the entire extension thereof so as to feature a plurality of appropriately spaced through-bores 57, in each one of which there can be introduced an elongated tie-rod 58 for insertion in a corresponding through-bore 59 provided in the respective plate 49 and 50, wherein the ends of such tie-rod are then secured to the template 46 and the corresponding plate, respectively.

In this manner, according to or depending on the length of the product to be cut, the tie-rods for attachment to the plates 49 and 50 are introduced in the through-bores 57 provided at the positions delimiting the portion of template that is adapted to enable the cutting blade 7 to be shifted, i.e. moved all along this length. In order to cause the cutting blade 7 to be shifted, i.e. progressively move along the template 46 over the entire length of the product to be cut, the inventive sawing machine is provided with a drive unit installed under the afore-described system of adjustment rods and formed of the hydraulic motor 8, as duly connected to the hydraulic circuit of the machine, and a mechanical reduction gear 61 for reducing the forward displacement rate of the cutting blade 7, wherein such reduction gear is associated to the hydraulic motor 8 and is linked with a pinion gear 62 meshing the through-apertures 56 in the vertical wing 54, so that by its meshing with said through-apertures 56 such pinion gear 62 - as driven by the above-mentioned assembly formed by the motor 8 and the reduction gear 61 - causes the sawing machine 5 to rotate about the vertical pin 9 thereof in the same direction of rotation as the pinion itself and, as a result, the cutting blade 7 to automatically move forwards in the same direction all along the extension of the template 46, thereby cutting the product all over the length thereof to the same contour and outline as said template, with the machine oriented both in a horizontal and an inclined position.

Advantageously, the motor/reduction gear assembly is arranged so as to be able to adjust the forward displacement rate of the cutting blade 7 in a manner that is inversely proportional to the power input to the hydraulic motor 8. In order to be able to exactly track the contour of a template 46, the sawing machine 5 is provided with at least a pair of guide rollers or wheels 63 and 64 located opposite to each other at both sides of the template 46 and supported by vertical pins 65 slidably inserted in corresponding through-bores (not indicated) in a flat plate 66 installed under the motor/reduction gear assembly, wherein such guide wheels can be adjusted heightwise into different positions relative to the template 46, by raising and lowering them relative to said flat plate 66, and are kept constantly in contact with the two sides of the vertical wing 54 of the template 46, so as to enable the contour of the same template to be tracked positively and reliably all over the length of the product to be cut.

## Claims

1. Sawing machine, such as band saw (5) or the like, for cutting stone, marble, wood, glass and other kinds of material with a cutting plane that is adjustable into different positions thereof, adapted to cut such materials along rectilinear horizontal, vertical, inclined and variously contoured directions, comprising a vertically extending metal frame (6) in a roughly triangular or a different shape, provided with at least a running cutting blade (7) formed of diamond fragments, adapted to be rotatably driven by motor means (8) and speed reduction means (61) and supported at the bottom by at least an articulated arm (10) pivotally joined at an end thereof to said frame (6), so as to enable it to rotate about a vertical axis into different adjustment positions, whereas the other end thereof is pivotally joined to a floor-mount upright pillar (16), or is secured to a wall, a riser, or the like, with adjustment heights that may be fixed or variable depending on the size of the products to be processed and the kind of processing to be performed, the sawing machine (5) being further provided with at least a horizontal support table (18) to at least partially support the products to be processed, the machine further comprising adjustment means (19, 20, 31, 32) adapted to adjust within given limits the inclination of said frame (6) along a vertical plane, so as to determine variously inclined and contoured rectilinear cuts in the products being processed, and finally comprising at least a template (46) conformed to the desired contour of the respective product to be processed and adapted to cooperate with motion-transmission means (62) driven by said motor means (8) and said speed reducing means (61) so as to cause both said frame (6) and said cutting blade (7) to rotate about the vertical axis into the various adjustment positions thereof, to thereby be capable of cutting the product along the whole length thereof and to the same contour as the related template (46), **characterized in that** said template (46) is comprised of a L-shaped metal part (53) provided with an upper metal wing (54), orthogonally joined to a lower horizontal wing (55), wherein said vertical wing (54) is conformed over the entire
or
longitudinal extension thereof to the same curved, wavy, corrugated, or semi-circular shape of the product to be obtained after cutting, and is provided over the entire longitudinal extension thereof with a plurality of identical through apertures (56) forming the teeth of a rack for said motion-transmission means (pinion gear 62) to mesh therewith so as to cause said name (6) to rotate horizontally and said cutting blade (7) to move forward in a manner corresponding to the direction of displacement determined by the rotation of said motor-transmission means (62), and wherein said horizontal wing (55) is perforated along the entire extension thereof so as to feature a plurality of appropriately spaced through-bores (57) for fastening means (tie-rods 58) to be introduced therein for being secured to first and second plates (49, 50), adapted to partially support the products to be processed and the end portions of said template (46), in positions delimiting the portion of template (46) that is adapted to enable said cutting blade (7) to be moved along the entire length of the product to be cut.

2. Sawing machine according to claim 1, **characterized in that** said inclination adjustment means comprise a first stationary bar (19) and a second moving bar (20) installed in the lower portion of said frame (6) and joined with each other in an articulated manner at an end thereof by means of a related pin (21), said stationary bar (19) being secured to said articulated arm (10) at the same point (9) at which said frame (6) is pivotally secured to said articulated arm (10), and being further linked with the other end thereof, by means of a pin (22), to a vertical elongated rod (23) provided with a free upper end (24) and an elongated slot (25), in which there is adapted to slide a protruding pin (26), secured to the lower portion of said frame (6), said stationary bar (19) being further linked with said frame (6) via manually operated actuator means (hydraulic jack 27), and said moving bar (20) being secured under said frame (6) and displaceable upwards by said actuator means (27) from the horizontal position to variously inclined adjustment positions on the front side of the machine, along with said frame (6) and said cutting blade (7), and **characterized in that** said inclination adjustment means further comprise a first pair of upper rods (31) and a second pair of lower rods (32) hinged at an ends thereof on to slide means (34) adapted to slide vertically into various adjustment positions along runner means attached to the front portion of said frame (6), in a both horizontal and inclined position of said frame (6), said upper rods (31) being provided with a respective elongated slot (36), in which there is adapted to slide at least a corresponding pin (37) secured to the other end of the related lower rod (32).

3. Sawing machine according to claim 1, **characterized by** a first and a second rectilinear, elongated rigid support (44, 45) having a large resting surface, adapted to partially support the products to be
processed, and secured to said upright pillar (16) and a further upright pillar (47), respectively, that latter being secured to the ground at a given distance from the other upright pillar (47), so as to enable both the template (46) and the products to be cut to be supported thereupon over the full length thereof, said first and second rigid supports (44, 45) supporting said first and second plate (49, 50), capable of sliding therein into various adjustment positions and being from time to time locked in the respectively desired position with the aid of means known in the art.

4. Sawing machine according to claim 1, **characterized in that** said motor means (8) and speed reducing means (61) are arranged so as to be able to adjust the forward displacement rate of said cutting blade (7) in a manner that is inversely proportional to the power input to said motor means (8).

5. Sawing machine according to claim 4, **characterized in that** it further comprises guide means (wheels 63, 64) adapted to exactly track the contour of said template (46) and located opposite to each other at both sides of the same template (46), said guide means (63, 64) being supported by vertical pins (65) slidably inserted in corresponding through-bores in a flat plate (66) installed under said motor means (8) and speed reducing means (61), and being adjustable heightwise into different positions relative to said template (46), by raising and lowering them relative to said flat plate (66), and being kept constantly in contact with the two sides of said vertical wing (54) of said template (46) all over the length of the product to be cut.

## Patentansprüche

1. Sägemaschine wie Bandsäge (5) oder dergleichen, zum Schneiden von Stein, Marmor, Holz , Glas und anderen Arten von Material mit einer Schnittebene, die in verschiedene Positionen einstellbar ist, die geeignet ist, solche Materialien entlang geradliniger horizontaler, vertikaler, geneigter und verschieden konturierter Richtungen zu schneiden, und die einen sich vertikal erstreckenden Metallrahmen (6) mit einer im Wesentlichen dreieckigen oder einer unterschiedlichen Form umfasst und mit wenigstens einem laufenden Schneideblatt (7) versehen ist, welches aus Diamantfragmenten gebildet ist und geeignet ist, durch eine Motoreinrichtung (8) und eine Geschwindigkeitsherabsetzungseinrichtung (61) drehend angetrieben zu werden und welches am Boden durch zumindest einen mit Gelenken versehenen Arm (10) gestützt wird, der schwenkbar mit einem seiner Enden an dem Rahmen (6) angelenkt ist, sodass er in der Lage ist, sich um eine vertikale Achse in verschiedene Einstellungspositionen zu drehen, während sein anderes Ende mit einem aufrechten Pfeiler (16) schwenkbar verbunden ist, der am Boden montiert ist oder an einer Wand an einem Träger oder ähnlichem befestigt ist und mit Höheneinstellungsvorrichtungen versehen ist, die fest oder veränderlich sein können, abhängig von der Größe der zu verarbeitenden Produkte und der Art der Bearbeitung, die durchgeführt werden soll, wobei die Sägemaschine (5) weiter mit wenigstens einem horizontalen Stütztisch (18) versehen ist, der dazu dient, die zu verarbeitenden Produkte zumindest teilweise zu unterstützen, und wobei die Maschine weiter Einstellvorrichtungen (19, 20, 31, 32) umfasst, die dazu geeignet sind, die Neigung des Rahmens (6) innerhalb vorgegebenen Grenzen entlang einer Ebene einzustellen und auf diese Weise verschieden geneigte und konturierte geradlinige Schnitte in den zu verarbeitenden Produkten festzulegen und wobei sie schließlich mindestens eine Muster (46) umfasst, das der gewünschten Kontur des jeweiligen zu verarbeitenden Produktes entspricht und dazu geeignet ist, mit Bewegungsübertragungsvorrichtungen (62) zusammenzuwirken, die von der Motorvorrichtung (8) und der Geschwindigkeitsverminderungsvorrichtung (61) angetrieben werden, um auf diese Weise sowohl den Rahmen (6) als auch das Schneideblatt (7) zu einer Rotation um die Vertikalachse in deren verschiedene Einstellpositionen zu veranlassen um auf diese Weise in der Lage zu sein, das Produkt entlang seiner gesamten Länge und auf die gleiche Kontur wie das zugehörige Muster (46) zu schneiden, **dadurch gekennzeichnet, dass** das Muster (46) ein L-förmiges Metallteil (53) umfasst, welches mit einem oberen Metallflügel (54) versehen ist, der rechtwinklig, mit einem unteren horizontalen Flügel (55) verbunden ist, wobei der vertikale Flügel (54) über seine gesamte Längserstreckung an die gleiche gekurvte, wellige, geriefte oder halbkreisförmige Form des nach dem Schneiden herzustellenden Endprodukts angepasst ist und wobei er über seine gesamte Längserstreckung mit einer Vielzahl identischer Durchtrittsöffnungen (56) versehen ist, die die Zähne für eine Zahnstange bilden, in die die Bewegungs- Übertragungsvorrichtung (Zahnradgetriebe 62) eingreifen, um auf diese Weise den Rahmen (6) horizontal zu drehen und das Schneideblatt (7) vorwärts zu bewegen, in einer Weise, die der Richtung, die der Verschiebung entspricht durch die Rotation der Bewegungs- Übertragungsvorrichtung (62) bestimmt wird, und wobei der horizontale Flügel (55) entlang seiner gesamten Erstreckung perforiert ist um auf diese Weise eine Vielzahl von passend beabstandeter Durchbohrungen (57) für Befestigungsvorrichtungen (Haltestreben 58) aufzuweisen, die darin eingeführt werden, um an ersten und zweiten Platten (49, 50) befestigt zu sein, die dazu dienen, die zu verarbeitenden Produkte und die Endabschnitte des Musters (46) teilweise zu stützen, in Stellungen, die den Abschnitt des Musters (46) begrenzen, der geeignet ist, es dem Schneideblatt (7) zu ermöglichen, entlang der gesamten Länge des zu schneidenden Produkts bewegt zu werden.

2. Sägemaschine nach Anspruch 1, **dadurch gekennzeichnet, dass** die Neigungseinstellungsvorrichtung einen ersten stationären Bügel (19) und einen zweiten beweglichen Bügel (20) umfasst, die in dem unteren Abschnitt des Rahmens (6) eingebaut sind und miteinander gelenkig an einem ihrer Enden mittels eines entsprechenden Stiftes (21) verbunden sind, wobei der stationäre Bügel (19) an der gleichen Stelle an dem gelenkigen Arm (10) befestigt ist, an dem der Rahmen (6) schwenkbar an dem gelenkigen Arm befestigt ist und der weiterhin mit seinem anderen Ende mittels eines Stiftes (22) mit einer sich vertikal erstreckenden Stange (23) verbunden ist, die ein freies oberes Ende (24) und einen länglichen Schlitz (25) aufweist, in dem ein hervorstehender Stift (26) gleitbar angeordnet ist, der an dem unteren Abschnitt des Rahmens (6) befestigt ist, wobei der stationäre Bügel (19) weiterhin mit dem Rahmen (6) über eine handbetriebene Betätigungsvorrichtung (hydraulische Spindel 27) verbunden ist, und wobei der bewegliche Bügel (20) unter dem Rahmen (6) befestigt ist und mittels der Betätigungsvorrichtung (27) aus der horizontalen Stellung in verschiedene geneigte Einstellungen an der Vorderseite der Maschine gemeinsam mit dem Rahmen (6) und dem Schneideblatt (7) aufwärts verschoben werden kann, und **dadurch gekennzeichnet, dass** die Neigungseinstellungsvorrichtung weiterhin ein erstes Paar oberer Stangen (31) und ein zweites Paar unterer Stangen (32) umfasst, die mit ihren Enden an Schlittenvorrichtungen (34) angelenkt sind, die dafür vorgesehen sind, vertikal in verschiedenen Einstellpositionen entlang von Läufervorrichtungen, die an dem vorderen Abschnitt des Rahmens (6) angebracht sind, hineinzurutschen in eine sowohl horizontal als auch geneigte Stellung des Rahmens (6), wobei die oberen Stangen (31) mit einem jeweiligen länglichen Schlitz (36) versehen sind, in dem zumindestens ein entsprechender Stift (37) gleitbar angeordnet ist, der mit dem anderen Ende der entsprechenden unteren Stange (32) verbunden ist.

3. Sägemaschine nach Anspruch 1, **gekennzeichnet durch** einen ersten und einen zweiten geradlinigen, länglichen starren Träger (44, 45) mit einer großen Ablagefläche, die dazu dienen, die zu verarbeitenden Produkte teilweise zu unterstützen und die an dem aufrechten Pfeiler (16) und einem weiteren aufrechten Pfeiler (47) jeweils befestigt sind, wobei der Letztere in einem vorgegebenen Abstand von dem anderen aufrechten Pfeiler (16) am Boden befestigt ist, sodass sowohl das Muster (46) als auch die zu schneidenden Produkte darauf über ihre volle Länge abgestützt werden können, wobei der erste und zweite steife Träger (44, 45) die erste und zweite Platte (49, 50) unterstützen, die in der Lage sind, darin in verschiedene Einstellpositionen zu gleiten und von Zeit zu Zeit in der jeweils gewünschten Position mittels in dem Stand der Technik bekannter Mittel verriegelt zu werden.

4. Sägemaschine nach Anspruch 1, **dadurch gekennzeichnet, dass** die Motorvorrichtung (8) und die Geschwindigkeitsverringerungsvorrichtung (61) so ausgebildet sind, dass sie in der Lage sind, die Vorwärts- Verschiebungsgeschwindigkeit des Schneideblatts (7) in einer solchen Weise einzustellen, die umgekehrt proportional zu der Leistungsaufnahme der Motorvorrichtung (8) ist.

5. Sägemaschine nach Anspruch 1, **dadurch gekennzeichnet, dass** sie weiter Führungsvorrichtungen (Räder 63, 64) umfasst, die dazu geeignet sind, exakt der Kontur des Musters (46) zu folgen und einander gegenüberliegend an beiden Seiten des gleichen Musters (46) angeordnet sind, wobei die Führungsvorrichtungen (63, 64) von vertikalen Stiften (65) unterstützt werden, die gleitend in entsprechenden Durchbohrungen in einer flachen Platte (66) eingesetzt sind, die unter der Motorvorrichtung (8) und der Geschwindigkeitsverringerungsvorrichtung (61) eingebaut sind und der Höhe nach in verschiedene Stellungen in Bezug auf das Muster (46) eingestellt werden können, indem sie in Bezug auf die flache Platte (66) angehoben oder abgesenkt werden, wobei sie ständig in Kontakt mit den beiden Seiten des vertikalen Flügels (54) der Vorlage (46) über die gesamte Länge des zu schneidenden Produkts gehalten werden.

## Revendications

1. Machine à scier, telle qu'une scie à ruban (5) ou analogue, servant à couper de la pierre, du marbre, du bois, du verre et d'autres types de matériaux avec un plan de coupe qui peut être réglé dans différentes positions, adaptée pour découper ces matériaux le long de directions rectilignes horizontale, verticale, inclinée et à contours variables, comprenant un châssis métallique (6) s'étendant verticalement de forme à peu près triangulaire ou différente, munie d'au moins une lame de coupe mobile (7) formée de fragments de diamant, adaptée pour être entraînée en rotation par des moyens moteurs (8) et des moyens réducteurs de vitesse (61) et supportée en bas par au moins un bras articulé (10) monté à pivotement, à l'une de ses extrémités, audit châssis (6), de manière à lui permettre de tourner autour d'un axe vertical dans différentes positions de réglage, tandis que son autre extrémité est montée à pivotement sur un pilier droit monté au sol (16) ou est fixée à une paroi, un appui, ou analogue, avec des hauteurs de réglage qui peuvent être fixes ou variables en fonction de la taille des produits à traiter et du type de traitement à effectuer, la machine à scier (5) étant en outre munie d'au moins une table de support horizontale (18) pour supporter au moins en partie les produits à traiter, la machine comprenant en outre des moyens de réglage (19, 20, 31, 32) adaptés pour régler dans des limites données l'inclinaison dudit châssis (6) le long d'un plan vertical, de manière à déterminer des coupes rectilignes différemment inclinées et contournées dans les produits en cours de traitement et enfin comprenant au moins un gabarit (46) conformé au contour souhaité du produit respectif à traiter et adapté pour coopérer avec des moyens de transmission de mouvement (62) entraînés par lesdits moyens moteurs (8) et lesdits moyens réducteurs de vitesse (61) de manière à amener à la fois ledit châssis (6) et ladite lame de coupe (7) à tourner autour de l'axe vertical dans leurs différentes positions de réglage pour pouvoir ainsi couper le produit sur toute sa longueur et au même contour que le gabarit concerné (46), **caractérisée en ce que** ledit gabarit (46) est constitué d'une partie métallique en forme de L (53) munie d'une ailette métallique supérieure (54), assemblée orthogonalement sur une ailette horizontale inférieure (55), dans laquelle ladite ailette verticale (54) est conformée sur toute son extension longitudinale à la même forme incurvée, ridée, ondulée, ou semi-circulaire du produit à obtenir après coupe, et est munie sur toute son extension longitudinale d'une pluralité d'ouvertures traversantes identiques (56) formant les dents d'une crémaillère pour lesdits moyens de transmission de mouvement (pignon 62) afin de s'engrener sur celui-ci pour amener ledit châssis (6) à tourner horizontalement et ladite lame de coupe (7) à se déplacer en avant de manière correspondante au sens de déplacement déterminé par la rotation desdits moyens de transmission de mouvement (62) et dans laquelle ladite ailette horizontale (55) est perforée sur toute son extension afin de présenter une pluralité de trous traversants (57) espacés de manière appropriée pour y introduire des moyens de fixation (tirants 58) de manière à les fixer à une première et à une seconde plaque (49, 50), adaptées pour supporter en partie les produits à traiter et les portions d'extrémité dudit gabarit (46), dans des positions délimitant la portion de gabarit (46) qui est adaptée pour permettre de déplacer ladite lame de coupe (7) sur toute la longueur du produit à couper.

2. Machine à scier selon la revendication 1, **caractérisée en ce que** lesdits moyens de réglage d'inclinaison comprennent une première barre stationnaire (19) et une seconde barre mobile (20) installées dans la portion inférieure dudit châssis (6) et assemblées l'une à l'autre de manière articulée à une de leurs extrémités à l'aide d'une broche connexe (21), ladite barre stationnaire (19) étant fixée audit bras articulé (10) au même point (9) où ledit châssis (6) est fixé à pivotement audit bras articulé (10) et étant en outre reliée, par son autre extrémité, à l'aide d'une broche (22), à une tige verticale allongée (23) pourvue d'une extrémité supérieure libre (24) et d'une fente allongée (25), dans laquelle se trouve une broche saillante (26) à même de coulisser, fixée à la portion inférieure dudit châssis (6), ladite barre stationnaire (19) étant en outre reliée audit châssis (6) via des moyens d'actionnement activés manuellement (vérin hydraulique 27), et ladite barre mobile (20) étant fixée sous ledit châssis (6) et pouvant être déplacée vers le haut par lesdits moyens d'actionnement (27) de la position horizontale à des positions de réglage différemment inclinées sur le côté avant de la machine, conjointement avec ledit châssis (6) et ladite lame de coupe (7), et **caractérisée en ce que** lesdits moyens de réglage d'inclinaison comprennent en outre une première paire de tiges supérieures (31) et une seconde paire de tiges inférieures (32) articulées à leurs extrémités sur des moyens coulissants (34) adaptés pour coulisser verticalement dans différentes positions de réglage le long de moyens de roulement attachés à la portion avant dudit châssis (6), dans une position à la fois horizontale et inclinée dudit châssis (6), lesdites tiges supérieures (31) étant pourvues d'une fente allongée respective (36), dans laquelle est adaptée pour coulisser au moins une broche correspondante (37) fixée à l'autre extrémité de la tige inférieure connexe (32).

3. Machine à scier selon la revendication 1, **caractérisée par** un premier et un second support rigide rectiligne allongé (44, 45) ayant une grande surface de repos, adaptée pour supporter en partie les produits à traiter et fixée audit pilier droit (16) et à un autre pilier droit (47), respectivement, ce dernier étant fixé au sol à une distance donnée de l'autre pilier droit (47) pour faire en sorte qu'à la fois le gabarit (46) et les produits à couper soient supportés dessus sur toute leur longueur, lesdits premier et second supports rigides (44, 45) supportant ladite première et ladite seconde plaque (49, 50), à même d'y coulisser dans différentes positions de réglage et étant de temps à autre verrouillées dans la position respectivement souhaitée à l'aide de moyens connus dans la technique.

4. Machine à scier selon la revendication 1, **caractérisée en ce que** lesdits moyens moteurs (8) et lesdits moyens réducteurs de vitesse (61) sont aménagés pour pouvoir régler la vitesse de déplacement en avant de ladite lame de coupe (7) de manière inversement proportionnelle à la puissance alimentée auxdits moyens moteurs (8).

5. Machine à scier selon la revendication 4, **caractérisée en ce qu'**elle comprend en outre des moyens de guidage (roues 63, 64) adaptés pour suivre exactement le contour dudit gabarit (46) et placées en regard l'une de l'autre des deux côtés du même gabarit (46), lesdits moyens de guidage (63, 64) étant supportés par des broches verticales (65) insérées à coulissement dans des trous traversants correspondants ménagés dans une plaque plate (66) installée sous lesdits moyens moteurs (8) et les moyens réducteurs de vitesse (61), et étant réglables en hauteur dans différentes positions par rapport audit gabarit (46), en les soulevant et les abaissant par rapport à ladite plaque plate (66), et étant constamment maintenues en contact avec les deux côtés de ladite ailette verticale (54) dudit gabarit (46) sur toute la longueur du produit à couper.
